# EUROPEAN PATENT APPLICATION

(11) **EP 1 715 603 A2**
(43) Date of publication of application: **25.10.2006**
(21) Application number: 06007908.4
(22) Date of filing: 13.04.2006
(51) Int. Cl.: H04H 1/00

(54) **Apparatus and method for controlling electric appliances using broadcast wave, and apparatus and method for controlling home network**

(30) Priority: 18.04.2005 KR 20050032026; 16.05.2005 KR 20050040811; 16.05.2005 KR 20050040816; 16.05.2005 KR 20050040814; 16.05.2005 KR 20050040812
(71) Applicant: LG Electronics, Inc., Seoul 150-010 (KR)
(72) Inventor: Jung, Munho, Bundang-gu Seongnam Gyeonggi-do 463-753 (KR); Yi, Dong-Hoon, Gireum 1-dong Seongbuk-gu Seoul 136-770 (KR); Joe, Moon Jeung, Dongan-gu Anyang-si Gyeonggi-do 431-776 (KR); Lee, Hee-Youn, Gangnam-gu Seoul 135-508 (KR); Kim, Sun Woo, Seoul 135-010 (KR); Lee, Joonhwi, Yeongdeungpo-gu Seoul 150-788 (KR)
(74) Representative: Beyer, Andreas

(57) **Abstract**

An apparatus and a method for controlling an electric appliance using a broadcast wave are disclosed. Various electric appliances widely used in each household are so configured as to be equipped with a broadcast receiving module and receive a product-related additional data packet through the broadcast wave such as an FM multiplex broadcasting. The electric appliance controls its own operation according to information in the received additional data packet. Accordingly, the present invention enables the electric appliances to be remotely controlled by receiving the product control information packet transmitted through the broadcast wave. The present invention enables a natural disaster to be warned by receiving a disaster warning data packet transmitted through the broadcast wave. The present invention further enables guidance information on the electric appliance to be displayed by receiving the product guidance information packet transmitted through the broadcast wave.

## Description

### CLAIM FOR PRIORITY

This application claims priority under 35 U.S.C. §119 to Korean Patent Application No. 10-2005-0032026 filed on April 18, 2005, 10-2005-0040811 filed on May 16, 2005, 10-2005-0040816 filed on May 16, 2005, 10-2005-0040814 filed on May 16, 2005, 10-2005-0040812 filed on May 16, 2005 the entirety of each contents of which are hereby incorporated by reference.

### BACKGROUND

This description relates to an apparatus and a method for controlling an electric appliance using a broadcast wave, and an apparatus and a method for controlling a home network.

Various types of information transmission technology has been developed using a multiplex broadcasting which can carry and broadcast a predetermined data on a frequency spectrum domain that is not used in a baseband of a broadcast wave for transmitting a predetermined broadcast signal. A frequency modulation (FM) multiplex broadcasting has been widely used as the multiplex broadcasting.

The FM multiplex broadcasting is one of the broadcasting systems that is transmitted by adding various information to a radio digital system (RDS) signal or a data radio channel (DARC) signal in a frequency spectrum domain ranging from 53 to 100kHzwhich has not been used in a FM baseband.

The FM multiplex broadcasting receiver enables a user to listen to an FM broadcast and also receive various information that is transmitted through the FM multiplex broadcasting. For example, the FM multiplex broadcasting may provide real-time information such as weather information, securities information, traffic information, and other information. Additionally, the FM multiplex broadcasting may also provide all sorts of control information and disaster warnings.

### SUMMARY

A first object of the present invention is to provide an apparatus and a method for controlling an electric appliance using a broadcast wave so that an operation of the electric appliance may be controlled using the broadcast wave such as an FM multiplex broadcasting.

A second object is to provide an apparatus and a method for controlling an electric appliance using the broadcast wave so that the electric appliance may receive disaster warning information transmitted through the broadcast wave to give the disaster warning.

A third object is to provide an apparatus and a method for controlling a home network using the broadcast wave which controls the operation of electric appliances connected to the home network.

A fourth object is to provide an apparatus and a method for controlling a home network using a broadcast wave so that the electric appliances may receive product guidance information transmitted through the broadcast wave to enable a user to check the information.

In order to accomplish the above objects, manufacturing companies of electric appliances provide a product-related additional packet related to the electric appliances to an FM broadcasting station, and the FM broadcasting station carries and transmits the product-related additional packet on a broadcast wave. It is preferable that a broadcast wave capable of transmitting the product-related additional packet be the FM multiplex broadcasting.

The product-related additional packet includes identification information capable of identifying electric appliances, and the respective appliances are also provided with identification information for identifying themselves.

The electric appliances compare identification information in the product-related additional packet with their own identification information, if the product-related additional packet is received, and the operation in accordance with data included in the product-related additional packet is performed, if the identification information is identical.

The product-related additional packet may be a product control information packet for controlling the operation of electric appliances or a disaster warning data packet for warning about a natural disaster.

If the product-related additional packet is the product control information packet, the product-related additional packet may control the operation of electric appliances or change a firmware into an upgraded firmware.

If control data for controlling a function control unit is included in the product control information packet, the electric appliances control an operation related to a function driving unit, according to the control data. Additionally, if the upgraded firmware is included in the product control information packet, the electric appliances change a relevant firmware of the function driving unit to an upgraded form.

Meanwhile, the electric appliances according to the present invention may be connected to a plurality of other electric appliances via a home network.

In case the plurality of electric appliances is connected to the home network, if identification information included in a product-related additional packet corresponds to identification information of a first electric appliance, the product-related additional packet is processed by the first electric appliance having a function for receiving the product-related additional packet.

Furthermore, if the information included in the product-related additional packet does not correspond to the information of the first electric appliance, the product-related additional packet is processed through the home network by being transmitted to a second electric appliance not having the function of receiving the product-related additional packet.

In the transmission of the product-related additional packet, the first electric appliance transmits the product-related additional packet through the home network, and the second electric appliance judges whether the identification information included in the product-related additional packet corresponds to the identification information given to itself, if the product-related additional packet is received, and if the identification information is identical, processes the product-related additional packet.

The identification information of the second electric appliance is pre-stored in the first electric appliance, and a search is performed for the second electric appliance for which the identification information identical to the identification information included in the product-related additional packet is given. Moreover, the searched second electric appliance receives and processes the product-related additional packet.

The product-related additional packet may be a product guidance information packet included with guidance information for guiding how to use electric appliances via video, voice, graphic, text message information and the like.

The first electric appliance connected to the home network enables a user interface intrisically built in the first electric appliance to display guidance information of the product guidance information packet, if the product guidance information packet is received.

When the user interface disposed in the first electric appliance cannot display the guidance information of the product guidance information packet, the first electric appliance is connected to the home network, searches for a second electric appliance capable of displaying guidance information, and transmits the guidance information to the second electric appliance so as to display the guidance information.

### BRIEF DESCRIPTION OF THE DRAWINGS

- FIG. 1: is a diagram illustrating a frequency spectrum of an FM basebad signal.
- FIG. 2: is a diagram explaining a principle of controlling an operation of an electric appliance according to a first exemplary embodiment of the present invention.
- FIG. 3: is a block diagram illustrating a configuration of the electric appliance according to the first exemplary embodiment of the present invention.
- FIG. 4: is a detailed block diagram illustrating a configuration of a control unit shown in FIG. 4.
- FIG. 5: is a diagram illustrating an example of a frame structure of an FM multiplex broadcasting for transmitting a product control information packet according to the present invention.
- FIG. 6: is a diagram illustrating an example of the product control information packet according to the present invention.
- FIG. 7: is a signal flow chart illustrating a method for controlling the electric appliance according to the first exemplary embodiment of the present invention.
- FIG. 8: is a diagram explaining an operation principle for warning about a natural disaster through the electric appliance according to a second exemplary embodiment of the present invention.
- FIG. 9: is a block diagram illustrating a configuration of the electric appliance according to the second exemplary embodiment of the present invention.
- FIG. 10: is a detailed block diagram illustrating a configuration of the control unit shown in FIG. 9.
- FIG. 11: is a diagram illustrating an example of a natural disaster warning sound outputted on the electric appliance according to the second exemplary embodiment of the present invention.
- FIG. 12: is a signal flow chart illustrating a method for controlling the electric appliance according to the second exemplary embodiment of the present invention.
- FIG. 13: is a diagram explaining a principle of controlling the electric appliance through a home network according to a third exemplary embodiment of the present invention.
- FIG. 14: is a diagram illustrating a configuration of the electric appliance according to the third exemplary embodiment of the present invention.
- FIG. 15: is a detailed diagram illustrating a configuration of a first control unit shown in FIG. 14.
- FIG. 16: is a detailed diagram illustrating a configuration of a second control unit shown in FIG. 14.
- FIG. 17: is a diagram explaining an operation of requesting control of the electric appliance according to the third exemplary embodiment of the present invention.
- FIG. 18: is a signal flow chart illustrating a method for controlling the electric appliance connected to the home network according to the third exemplary embodiment of the present invention.
- FIG. 19: is a diagram explaining an operation for enabling the electric appliance to display guidance information according to a fourth exemplary embodiment of the present invention.
- FIG. 20: is a block diagram illustrating a configuration of the first electric appliance that can receive a broadcast wave through the home network for performing a function of displaying product guidance information according to the fourth exemplary embodiment of the present invention.
- FIG. 21: is a signal flow chart illustrating an operation for enabling the first electric appliance capable of receiving a broadcast wave through the home network to display information according to the fourth exemplary embodiment of the present invention.

### DETAILED DESCRIPTION

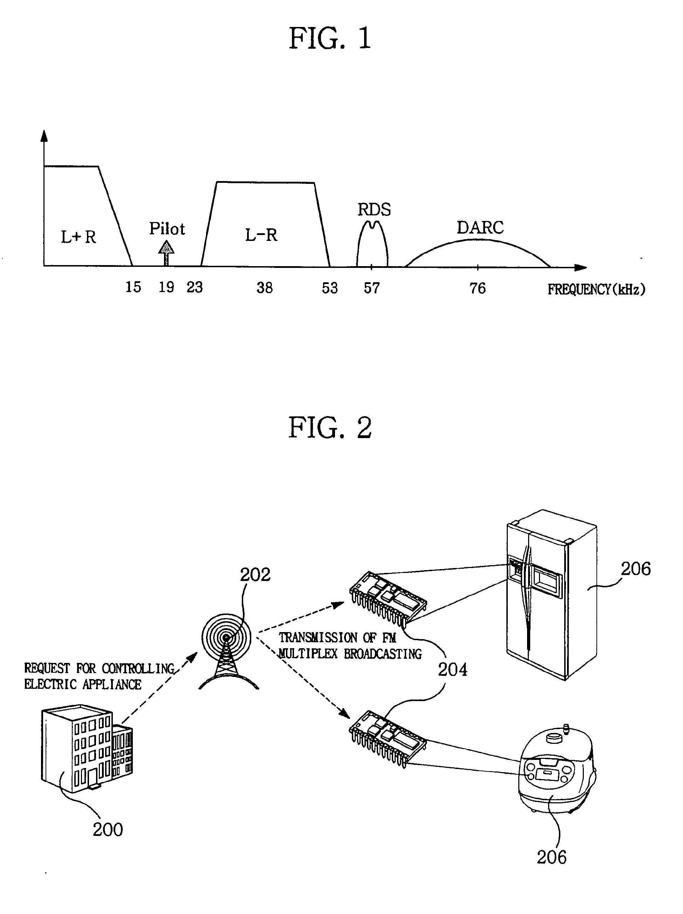

Referring to FIG. 1, in a baseband of an FM broadcast signal, audio signals (L-R and L+R) are respectively located in a spectrum domain ranging from 0 to 15 kHz and from 23 to 53 kHz for FM radio broadcast, and a pilot signal is located in the spectrum domain of 19 kHz.

A frequency spectrum domain ranging from 53 to 100 kHz is not used in the base band of the FM broadcast signal.

An FM multiplex broadcasting transmits all sorts of information using the frequency spectrum domain ranging from 53 to 100 kHz and includes a RDS and DARC signals.

The RDS signal is a signal for modulating a data signal of 1,187.5 bps with a differential binary phase shift keying mode. The frequency of a subcarrier is 57 kHz and uses an abbreviated cyclic code for correcting an error of data to be transmitted.

The DARC signal is a signal for performing a minimum shift keying modulation of a digital signal of 16 kHz by controlling a size of a difference (L-R) signal between L channel audio signal and R channel audio signal and filtering the modulated digital signal with a band pass filter. The frequency of a subcarrier is 76 kHz and uses the abbreviated cyclic code for correcting the error of data to be transmitted.

According to the present invention, information for controlling an electric appliance or disaster warning information is transmitted by using a broadcast wave such as the FM multiplex broadcasting. The information is received and processed by the electric appliance.

Referring now to FIG. 2, an electric appliance manufacturing company 200 requests the transmission of control information for controlling a predetermined electric appliance using an FM multiplex broadcasting signal to an FM broadcasting station 202, if it is necessary to control an operation of a specific electric appliance of the company 200.

In response to the request from the electric appliance manufacturing company 200, the FM broadcasting station 202 carries and transmits a product control information packet for the specific electric appliance on the FM multiplex broadcasting.

An electric appliance 206 widely used for respective homes is equipped with a broadcast receiving module 204. The broadcast receiving module 204 receives an FM multiplex broadcasting signal transmitted from the FM broadcasting station 202. Moreover, the electric appliance 206 extracts a product control information packet from the received FM multiplex broadcasting signal, and separates identification information and control information for identifying electric appliances from the extracted product control information packet. If the separated identification information does not correspond to previously given identification information, the control information is ignored. If the separated information corresponds to the information previously given to the electric appliance 206, the electric appliance 206 controls its own function in accordance with the separated control information.

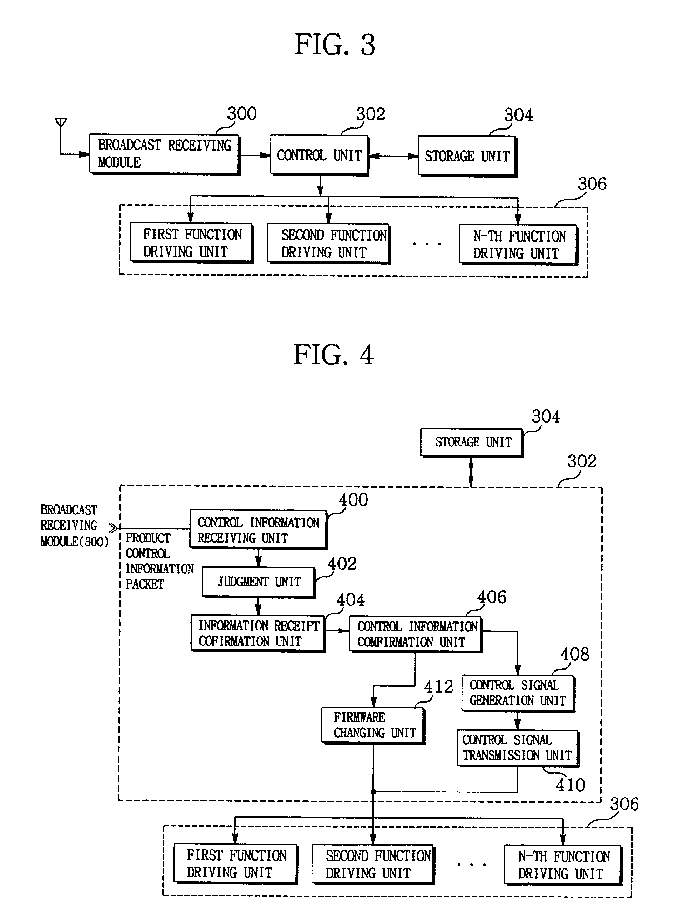

Referring to now FIG. 3, the electric appliance according to the present invention includes a broadcast receiving module 300, a control unit 302, a storage unit 304 and a plurality of function driving units 306.

The broadcast receiving module 300 receives a broadcast wave, namely, a product control information packet transmitted by an FM multiplex broadcasting.

The storage unit 304 previously stores identification information previously given to the electric appliance, the structure of the product control information packet, and interpretation information capable of interpreting respective data values in the control information packet.

The control unit 302 judges whether the identification information stored in the storage unit 304 is identical to in the product control information packet received by the broadcast receiving module 300.

As a result of the judgment, if the identification information is not identical, the control unit 302 ignores control information included in the product control information packet. If both of the identification information are identical, the control unit 302 controls an operation of the function driving unit 306 of the electric appliance in accordance with the control information in the product control information packet.

FIG. 4 is a detail block diagram illustrating a configuration of the control unit 302 shown in FIG. 3,

Where the control unit 302 includes a control information receiving unit 400, a judgment unit 402, an information receipt confirmation unit 404, a control information confirmation unit 406, a control signal generation unit 408, a control signal transmission unit 410 and a firmware changing unit 412.

The control information receiving unit 400 receives the product control information packet from the broadcasting receiving module 300.

The judgment unit 402 judges whether the control information included in the product control information packet received by the control information receiving unit 400 is control information for controlling the electric appliance itself, using the identification information previously stored in the storage unit 304.

In other words, in case the FM broadcasting station transmits the product control information packet, the product control information packet includes identification information for identifying a specific electric appliance and control information for controlling a specific electric appliance.

If the product control information packet is received, the electric appliance judges whether the product control information packet is for controlling itself.

According to the present invention, the identification information previously given to the electric appliance, the structure of the product control information packet, and the interpretation information capable of interpreting respective data values in the product control information packet are previously stored in the storage unit 304.

The judgment unit 402 analyzes the received product control information packet using the interpretation information stored in the storage unit 304, and judges whether the identification information included in the product control information packet is identical to that of the electric appliance stored in the storage unit 304.

As a result of judgment by the judgment unit 402 that both of the identification information are identical, the control signal generation unit 408 generates a control signal in accordance with the control information in the product control information packet.

The control signal transmission unit 410 transmits the generated control signal to the corresponding function driving unit 306. The function driving unit 306 performs a predetermined operation according to the control information of the product control information packet.

Successively, the information receipt confirmation unit 404 capable of confirming whether the same packet as the currently received product control information packet has been previously received, may be further included in the control unit 302.

The information receipt confirmation unit 404 discriminates whether the previously received product control information packet is identical with the currently received product control information packet. As a result of the discrimination, if the same product control information packet has been previously received, no operation is performed for the received product control information packet, thereby allowing the same control to be prevented from being repeatedly performed.

Even though the electric appliance repeatedly receives the same product control information packet through the FM multiplex broadcasting, a control corresponding to the product control information packet is performed only once.

According to the present invention, an upgraded firmware including control information for controlling a predetermined function of the electric appliance is carried and transmitted in the product control information packet, and the electric appliance receives the firmware and may change a firmware necessary for performing the predetermined function into the upgraded firmware.

In order to accomplish this, the control unit 302 further includes a control information confirmation unit 406 and a firmware changing unit 412.

The control information confirmation unit 406 checks the control information included in the product control information packet. As a result of the check, if control information for controlling a predetermined function of the electric appliance is included in the product control information packet, as described above, the control signal generation unit 408 and the control signal transmission unit 410 control in such a manner that the function driving unit 406 can perform a relevant function.

Additionally, if the upgraded firmware is included in the product control information packet, the firmware changing unit 412 changes a firmware of the function driving unit 306 to the upgraded firmware.

According to the present invention, it is so configured that the structure of the product control information packet and the interpretation information for interpreting all sorts of data values included in the product control information packet is stored in the storage unit 304, and the control unit 302 may judge meaning of data included in the received product control information packet with the interpretation information stored in the storage unit 304.

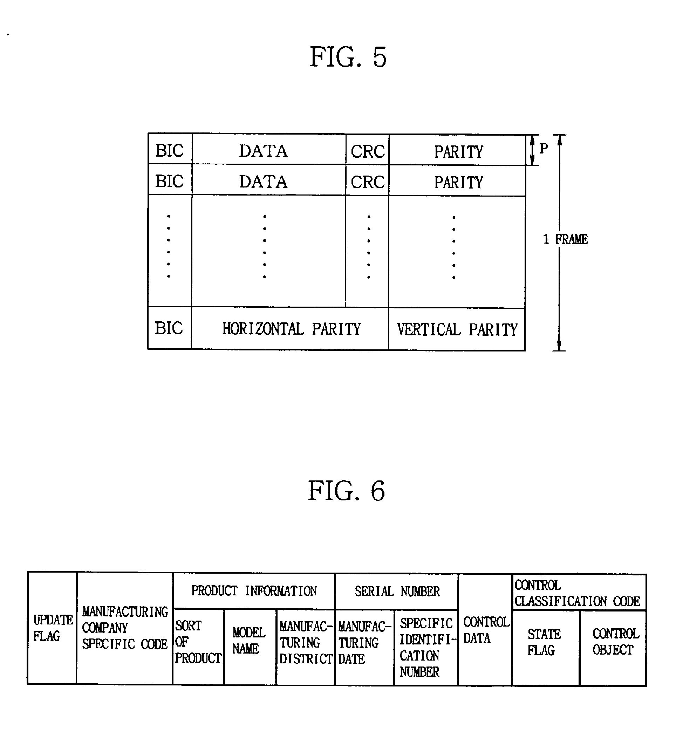

Referring now to FIG. 5, among respective product control information packets (P) constituting a frame, some are constituted by a combination of 'a block identification code (BIC) + data + a cyclic redundancy check (CRC) code + a parity', and others are constituted by a combination of 'a block identification code (BIC) + a horizontal parity + a vertical parity'. It is possible to remotely control an electric appliance through a broadcast wave by inserting control information of the electric appliance or the upgraded firmware into a region of the data and transmitting through the FM multiplex broadcasting.

As shown in to FIG. 6, the product control information packet may include an update-flag that is sequentially changed whenever a data value of the product control information packet is updated, a specific code of a manufacturing company that manufactures an electric appliance to be controlled, product information on the electric appliance, a serial number of the electric appliance, control data on the control of the electric appliance and a control classification code.

The update-flag has a value that is sequentially changed whenever a data value in the product control information packet is updated. For example, the update-flag is changed in the order of '00', '01', '10', '11' and '00' as the data value is updated.

The specific code of the manufacturing company is for classifying manufacturing companies that manufacture electric appliances. A plurality of manufacturing companies may classify control information for controlling their own manufactured electric appliances, using the specific code of the manufacturing company, and transmit the classified control information.

The product information is composed of information on the type, a model name and a manufacturing district of the electric appliance to be controlled. The serial number of the product, which is composed of a manufacturing date of the electric appliance and a specific identification number, provides information on the product to be controlled.

The identification information of the electric appliance may be composed of a specific code, product information and a serial number of the manufacturing company.

The control data discriminates whether the control of a predetermined function with regard to electric appliances indicated by the product information and the serial number is a control code or a firmware in which the predetermined function of the electric appliance is upgraded.

Accordingly, it is possible to remotely control the electric appliance or upgrade a firmware according to data being transmitted to the control data.

The control classification code is composed of a state flag representing a state of control data and a control object controlled by the control data. The state flag represents whether the control of the control data for respective functions of the electric appliance is a control code or a firmware in which a predetermined function of the electric appliance is an upgraded. The control object shows a relevant function driving unit 306 to be controlled by the control data among function driving units 306 equipped in the electric appliance.

The broadcast receiving module 300 receives a product control information packet and the received packet is inputted to the control information receiving unit 400. The judgment unit 402 separates a specific code of a manufacturing company in the product control information packet, product information and a serial number of a product, using the structure of the product control information packet previously stored in the storage unit 304 and the interpretation information capable of interpreting a data value in the product control information packet. Additionally, the judgment unit 402 discriminates whether identification information on the separated specific code of the manufacturing company, the product information and the serial number of the product is identical with identification information stored in the storage unit 304.

If the identification information is identical, the information receipt confirmation unit 404 discriminates whether the currently received product control information packet has the same data value as the previously received product control information packet by investigating an update-flag in the product control information packet. In other words, the information receipt confirmation unit 404 judges whether the same product control information packet has been previously received.

As a result of the judgment of the information receipt confirmation unit 404, if it is judged that the currently received product control information packet is different from the previously received product control information packet, the control information confirmation unit 406 checks a state flag among control classification codes in the product control information packet. As a result of the check of the state flag, judgment is made on whether the control data in the received product control information packet is the control code for controlling a function of the electric appliance or the firmware for upgrading the predetermined function of the electric appliance.

As a result of the judgment of the control information confirmation unit 406, if the control data in the product control information packet is the control code for the electric appliance, the control signal generation unit 408 generates a control signal for controlling the corresponding function driving unit 306 indicated by the control object of the control classification code. The control signal transmission unit 410 transmits the generated control signal to the corresponding function driving unit 306.

The plurality of function driving units 306 of the electric appliance is diversely included in respective electric appliances. For example, representative examples of the respective function driving units 306 may include a power supply unit, an information display window, a voice output unit, a central processing unit. According to the present invention, the control signals generated from the control signal generation unit 408 according to the control code in the product control information packet may be representatively Enable/Disable signals or power on/off signals of the function driving unit 306 corresponding to the control object among the diverse function driving units 306.

As a result of judgment by the control information confirmation unit 406, if it is judged that the control data in the product control information packet is a firmware for upgrading a predetermined function of the electric appliance, the firmware changing unit 412 changes the firmware of the function driving unit 306 corresponding to the control object to an upgraded form.

Accordingly, it is possible to remotely control electric appliances using a broadcast wave, or upgrade functions of the electric appliances by changing the firmware to the upgraded form.

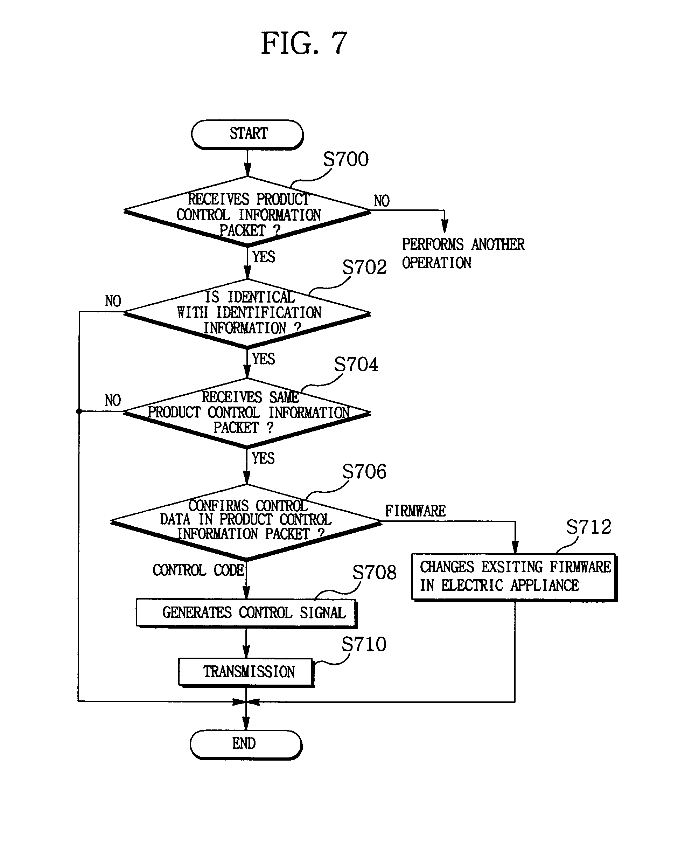

Referring now to FIG. 7, if the broadcast receiving module 300 disposed at the electric appliance receives the product control information packet transmitting through the broadcast wave S700, the control unit 302 judges whether the identification information in the received product control information packet is identical with the identification information previously stored in the storage unit 304 S702.

The control unit 302 judges whether the received product control information packet is the previously received product control information packet S704.

As a result of the judgment, if the identification information is identical and the received product control information packet is different from the previously received product control information packet, the control unit 302 checks the control data in the product control information packet S706.

According to the first exemplary embodiment of the present invention, the control data in the product control information packet, as described above, may be a control code that has defined a control for a predetermined function of the electric appliance or a firmware that has upgraded a predetermined function of the electric appliance.

Accordingly, as a result of the check of the control data, if it is the control code, the control unit 302 generates a control signal for the function driving unit 306 corresponding to the control object in the electric appliance according to the control code S308, transmits the generated control signal to the relevant function driving unit 306 so as to perform a corresponding operation S710.

As the result of the check of the control data, in case of the firmware for upgrading the predetermined function of the electric appliance, the control unit 302 changes the firmware of the corresponding function driving unit 306 to an upgraded firmware S712 and upgrades a function of the electric appliance.

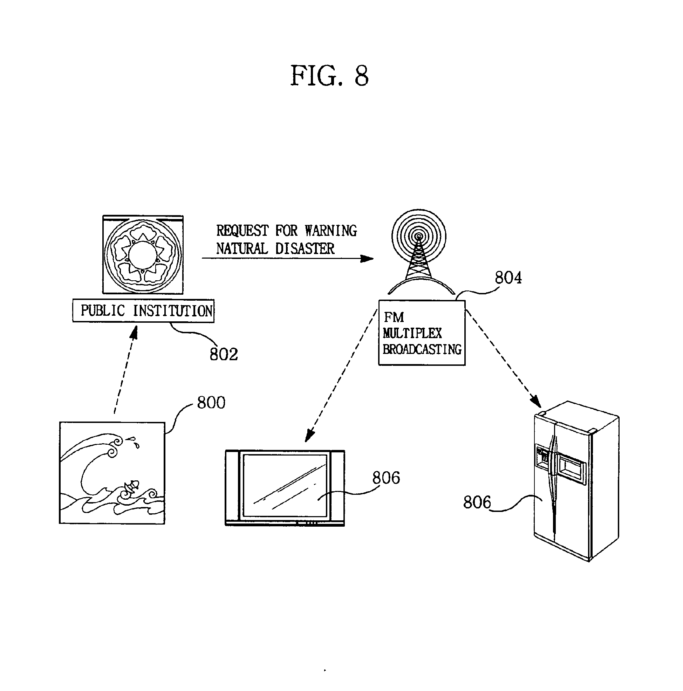

FIG. 8 is a diagram explaining an operation principle of warning a natural disaster through the electric appliance according to a second exemplary embodiment of the present invention, and shows an example of transmitting the generation of the natural disaster using the FM multiplex broadcasting and enabling the electric appliance to receive the broadcasting and give warning.

Electric appliances, such as a TV, an audio equipment, an electric rice cooker, a refrigerator and the like, which are widely used in respective homes, are closely related to real life. Accordingly, if the natural disaster occurs and the warning of the natural disaster is displayed through the electric appliances, the FM multiplex broadcasting can quickly and effectively give notice of the occurrence of the natural disaster to users of the electric appliances.

Referring to FIG. 8, if a natural disaster 800 such as a flood, a tidal wave or an earthquake occurs, a public institution 802 requests an FM broadcasting station 804 to broadcast the occurrence of the natural disaster to residents who reside within the influence of the natural disaster 800. Then, the FM broadcasting station 804 transmits a disaster warning data packet for letting on a natural disaster known through the FM multiplex broadcasting in response to the request of the public institution 802.

Electric appliances 806 widely used by respective households receive the disaster warning data packet via a built-in broadcast receiving module, and separate a disaster warning signal from the received disaster warning data packet so as to warn the natural disaster through a built-in voice output unit or a screen display unit.

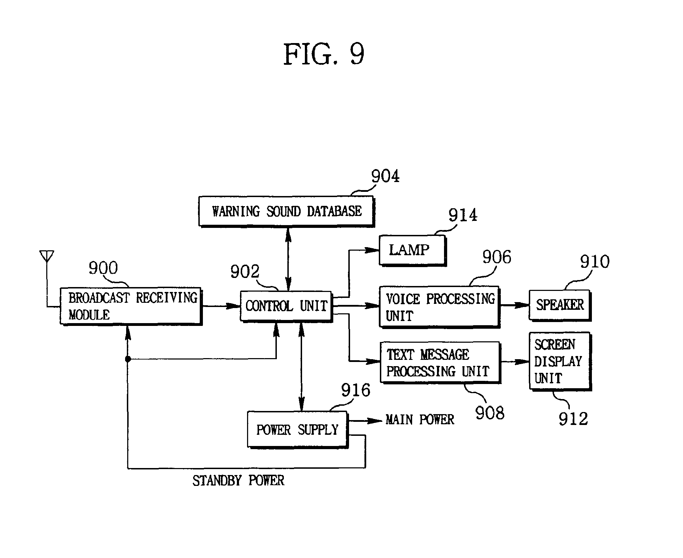

Now, referring to FIG. 9, the electric appliances, according to the present invention, include a broadcast receiving unit 900 for receiving a disaster warning data packet, a control unit 902 for outputting one or more data among warning sound data and warning text data in the disaster warning data packet, which the broadcast receiving module 900 receives, through a user interface of the electric appliance, and a power supply unit 916 for supplying a main power supply and a standby power supply to the electric appliance.

The control unit 902 analyzes the disaster warning data in the disaster warning data packet received by the broadcast receiving module 900. The control unit 902 also controls a voice processing unit 906 and a text message processing unit 908 respectively to give a warning through a speaker 910 mounted at the electric appliance and a screen display unit 912, according to the analyzed disaster warning.

The warning data in the disaster warning data packet may include warning sound data and warning text message data. The warning sound data is transmitted being included in the disaster warning data packet. The electric appliance receives the disaster warning data packet, extracts the warning sound data from the disaster warning data packet, and gives a warning.

Further, the warning sound data relative to a plurality of natural disasters is beforehand stored in a warning sound database 904 of the electric appliance. The electric appliance may read the corresponding warning sound data from the warning sound database 904 according a warning sound code included in the received disaster warning data packet and output the warning sound data through the voice processing unit 906 to the speaker 910.

The electric appliance may further include a lamp 914 for warning of a natural disaster and visually warn of occurrence of the natural disaster by switching on/off the lamp 914, if the disaster warning data packet is received.

According to the present invention, the electric appliance performs the warning of the natural disaster in response to the received disaster warning data packet through the user interface disposed at the electric appliance. Consequently, the invention may be limited to warning of the natural disaster, in response to a mode of the user interface defined at in the electric appliance and a capability of enabling the user interface to output a warning.

FIG. 9 is a diagram illustrating an example of a configuration of the electric appliance, having a user interface of warning a natural disaster with a voice signal or a text message signal. The electric appliance also can warn the natural disaster by switching on/off the lamp 914.

Preferably, the power supply unit 916 supplies main power to the electric appliance and standby power to the broadcast receiving module 900 and the control unit 902, when the main power of the electric appliance is turned off according to a user's power-off command.

The broadcast receiving module 900 and the control unit 902 may receive and process a disaster warning data packet broadcasted through the broadcast wave while maintaining a normal operation state without regard to on/off of the main power.

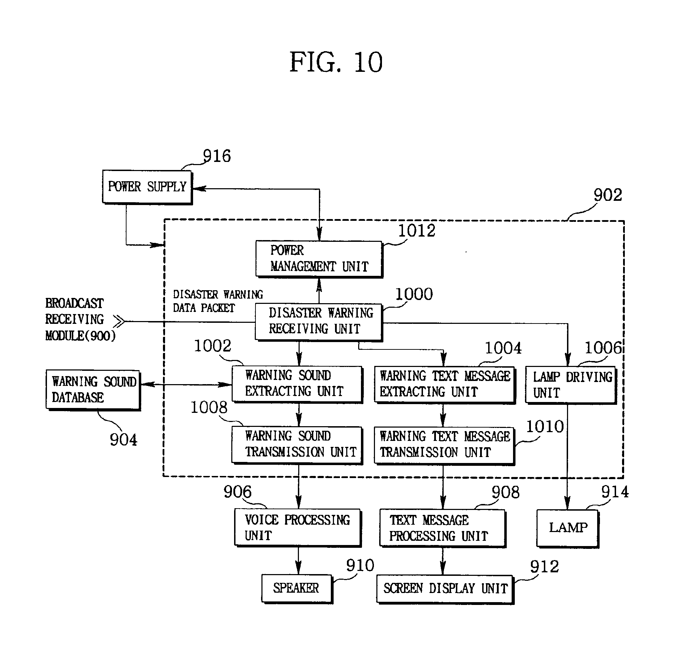

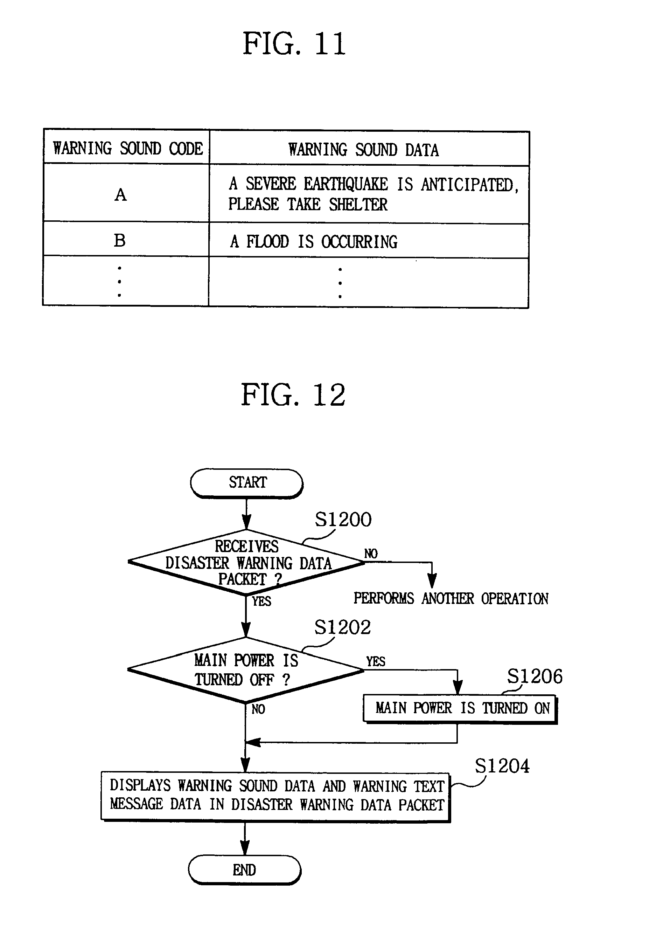

The control unit 902 discriminates whether the main power is in an on-state or an off-state, if the broadcast receiving module 900 receives the disaster warning data packet. As a result of discrimination, if it is discriminated that the main power is off, the control unit 902 controls in such a manner that the power supply unit 916 can turn on the main power to allow the received urgent disaster to be given through the user interface of the electric appliance.
Now, referring to FIG. 10, the control unit 902 includes a disaster warning receiving unit 1000, a warning sound extracting unit 1002, a warning text message extracting unit 1004, a lamp driving unit 1006, a warning sound transmission unit 1008, a warning text message transmission unit 1010 and a power management unit 1012. The disaster warning receiving unit 1000 receives a disaster warning data packet that the broadcast receiving module 900 receives.
The power management unit 1012 judges whether the main power is currently turned on or off by monitoring a state of the power supply unit 916, if the disaster warning receiving unit 1000 receives the disaster warning data packet. As a result of the judgment, if the main power is turned off, the power management unit 1012 controls the power supply unit 916 so that the main power can be turned on and the natural disaster relative to the disaster warning data packet can be warned through the user face.
The warning sound extracting unit 1002 reads warning sound data corresponding to a warning sound code included in the disaster warning data packet from the warning sound database 904. For example, as shown in FIG. 11, if a warning sound code 'A' is included in the disaster warning data packet, the warning sound extracting unit 1002 reads a warning sound data such as 'A severe earthquake is anticipated, please take shelter.' from the warning sound database 904. Additionally, if a warning sound code 'B' is included in the disaster warning data packet, the warning sound extracting unit 1002 reads a warning sound data such as 'flooding is occurring' from the warning sound database 904.

The warning sound data, which is read from the warning sound database 904 by the warning sound extracting unit 1002, is transmitted to the voice processing unit 906 through the warning sound transmission unit 1008 and outputted to the speaker 910. The disaster warning data packet may not include the warning sound code but may directly include warning sound data. If the warning sound data is included in the disaster warning data packet, the warning sound extracting unit 1002 may extract the warning sound data from the disaster warning data packet. The warning sound data, which is extracted from the disaster sound data packet by the warning sound extracting unit 1002, is transmitted to the voice processing unit 906 through the warning sound transmission unit 1008 and outputted to the speaker 910.
The warning text message extracting unit 1004 extracts warning text message data from the disaster warning data packet. The extracted warning text message data is transmitted to the text message processing unit 908 through the warning text message transmission unit 1010 in order to display a warning text message on the screen display unit 912.

If the disaster warning data packet is inputted to the disaster warning receiving unit 1000, the lamp driving unit 1006 may further warn the occurrence of a natural disaster by switching on/off the lamp 914.

Now, referring to FIG. 12, the control unit 902 judges whether the broadcast receiving module 900 has received the disaster warning data packet S1200. As a result of judgment, if having received the disaster warning data packet, the control unit 902 judges whether the main power of the control unit 916 is turned off S1202.

If the main power is turned off, the control unit 902 controls the power supply unit 916 to turn on the main power and to enable the electric appliance to be normally operated S1206.

If the main power of the electric appliance is turned on, the control unit 902 enables any one or more warning data of the natural disaster among the warning sound data and warning text message data included in the received disaster warning data packet to be displayed through the user interface (step S1204).

If the disaster warning data packet does not include the warning sound data but include the warning sound code, the control unit 902 reads warning sound data corresponding to the warning sound code from the warning sound database 904 and outputs the data through the user interface.

According to the present invention, the plurality of electric appliances connected to the home network may be controlled. If connected to the home network, all of the plurality of electric appliances may be controlled even though the broadcast receiving module is not equipped with all the electric appliances but only with one of the electric appliances.

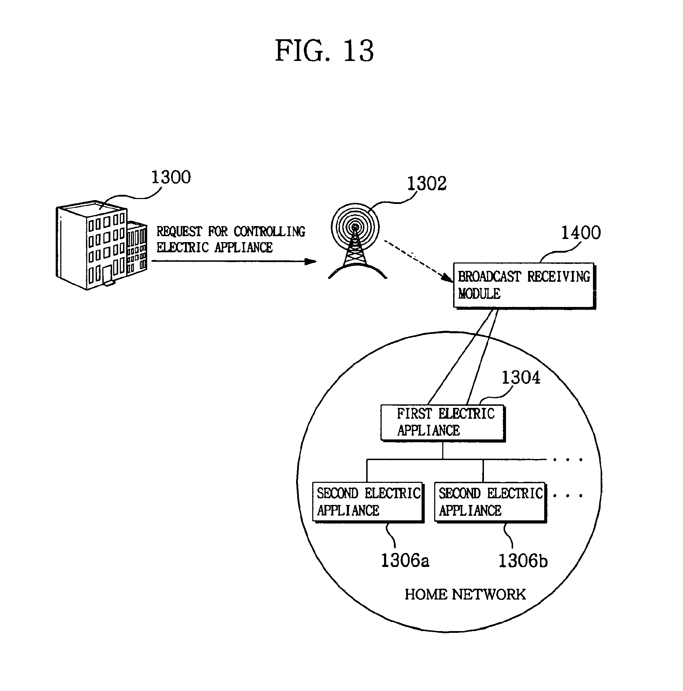

FIG. 13 is a diagram explaining an operation principle of controlling the electric appliance connected to the home network according to a third exemplary embodiment of the present invention.

Referring to FIG. 13, an electric appliance manufacturing company 1300 requests an FM broadcasting station 1302 the broadcast of control information, which can control a predetermined electric appliance, through an FM multiplex broadcasting. The FM broadcasting station 1302 broadcasts the control information on the electric appliance through the FM multiplex broadcasting in response to the request from the electric appliance manufacturing company 1300.

First and second electric appliances 1304 and 1306 (1306a, 1306b, ...) are mutually connected to the home network. The first electric appliance 1304 having a broadcast receiving module 1400 receives a product control information packet broadcast by the FM broadcasting station 1302 through the FM multiplex broadcasting. Further, the first electric appliance 1304 judges whether the received product control information packet controls the appliance 1304 itself.

As a result of the judgment, if the product control information packet is intended for controlling the appliance 1304 itself, the first electric appliance 1304 performs an operation in response to the control data in the product control information packet. As a result, if the packet is not intended for controlling the appliance 1304 itself, the first electric appliance 1304 transmits the product control information packet to all the second electric appliances 1306 connected to the home network.

The second electric appliances 1306 receive the product control information packet transmitted from the first electric appliance 1304, and perform an operation in response to the control data in the product control information packet if the received product control information packet is for controlling appliance 1304 itself.

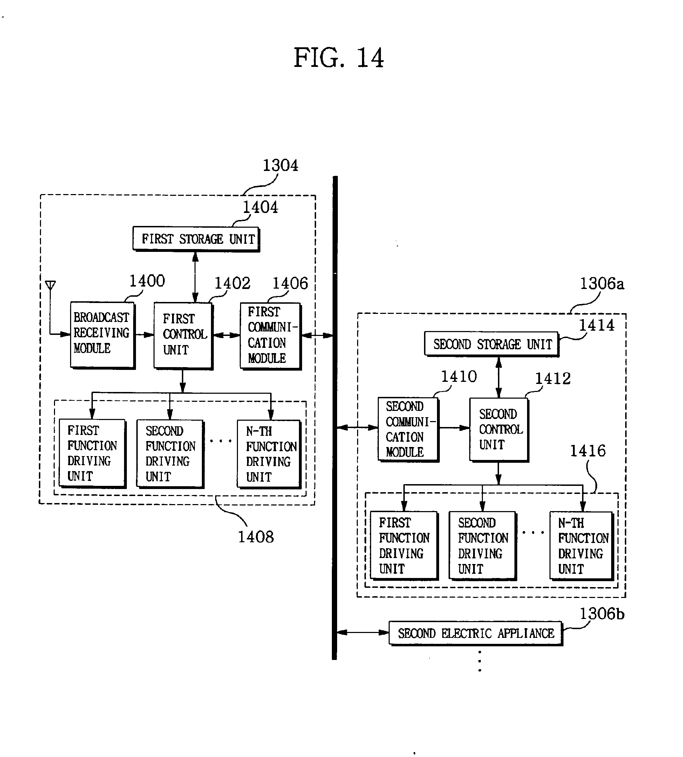

FIG. 14 is a diagram illustrating a configuration of the electric appliance according to the third exemplary embodiment of the present invention.

Referring now to FIG. 14, the first electric appliance 1304 and the plurality of the second electric appliances 1306 are interconnected through the home network. The first electric appliance 1304 having the broadcast receiving module 1400 receives the product control information packet transmitted through the FM multiplex broadcasting. The second electric appliances 1306 are not equipped with a broadcast receiving module for receiving a product control information packet.

The first electric appliance 1304 can transmit the received product control information packet to the second electric appliances 1306 through the home network. Accordingly, the first electric appliance 1304 and the second electric appliances 1306 can perform an operation in response to the control data of the product control information packet transmitted through the FM multiplex broadcasting.

The first electric appliance 1304 includes the broadcast receiving module 1400 for receiving a product control information packet, a first control unit 1402 for controlling an operation of the first electric appliance 1304 according to the product control information packet received by the broadcast receiving module 1400, a first storage unit 1404 for storing its own identification information, identification information on the second electric appliances 1306 that exists on the home network, a structure of a product control information packet and interpretation information capable of interpreting respective data values in the product control information packet, a first communication module 1406 for performing a communication with the second electric appliances 1306 that are connected to the home network, and a plurality of function driving units 1408 for performing a predetermined function according to the control of the first control unit 1402.

If the broadcast receiving module 1400 receives the product control information packet transmitted through the FM multiplex broadcasting, the first control unit 1402 of the first electric appliance 1304 compares identification information in the received product control information packet with that of the first electric appliance 1304 stored in the first storage unit 1404.

If the identification information in the product control information packet received by the broadcast receiving module 1400 is identical with that of the first electric appliance 1304 stored in the first storage unit 1404, the first control unit 1402 enables the function driving unit 1408 corresponding to a control object to be driven in response to the control data in the product control information packet.

Additionally, as a result of the comparison, if the identification information is not identical, the first control unit 1402 transmits the received product control information packet to the second electric appliances 1306 through the first communication module 1406.

In case the first control unit 1402 transmits the product control information packet to the second electric appliance 1306, the first control unit 1402 first checks whether the second electric appliance 1306 is currently connected to the home network through the first communication module 1406.

If it is checked that the second electric appliance 1306 is connected to the home network, the first control unit 1402 transmits the product control information packet to the second electric appliance 1306 through the first communication module 1406. If the second electric appliance 1306 is not connected to the home network, the first control unit 1402 continuously checks whether the second electric appliance 1306 is connected to the home network, and transmits the product control information packet to the second electric appliance 1306, if the second electric appliance 1306 is connected to the home network.

Further, if the identification information in the product control information packet is not identical with that of the first electric appliance 1304, the first control unit 1402 searches for the second electric appliance 1306 having the identical identification information, by comparing identification information of the second electric appliances 1306 stored in the first storage unit 1404 with that in the product control information packet. If the second electric appliance having the identical identification information is found, the first control unit 1402 transmits the product control information packet to the second corresponded electric appliance 1306 through the first communication module 1406.

The first electric appliance 1304 may transmit the product control information packet to the second electric appliances 1306 directly through the home network, without comparing the identification information in the received product control information packet with that of the second electric appliances 1306.

The second electric appliance 1306 includes a second communication module 1410 for receiving a product control information packet by performing a communication with the first electric appliance 1304, a second control unit 1412 for controlling an operation of the second electric appliance 1306 according to the control data of the product control information packet, a second storage unit 1414 for storing its own identification information, a structure of a product control information packet and interpretation information capable of interpreting respective data values in the product control information packet, and a plurality of function driving units 1416 for performing a predetermined function according to the control of the second control unit 1412.

If the product control information packet transmitted from the first electric appliance 1304 through the home network is received by the second communication module 1410, the second control unit 1412 judges whether identification information in the product control information packet is identical to that of the second electric appliance 1306 stored in the second storage unit 1414.

As a result of the judgment, if the identification information is identical, the second control unit 1412 controls in such a fashion that the function driving unit 1416 corresponding to a control object can be driven according to the control data in the product control information packet.

If only one electric appliance out of a plurality of electric appliances connected to the home network is just equipped with the broadcast receiving module capable of receiving the product control information packet, the electric appliances connected to the home network may be controlled, in accordance with the product control information packet broadcast through the FM multiplex broadcasting.

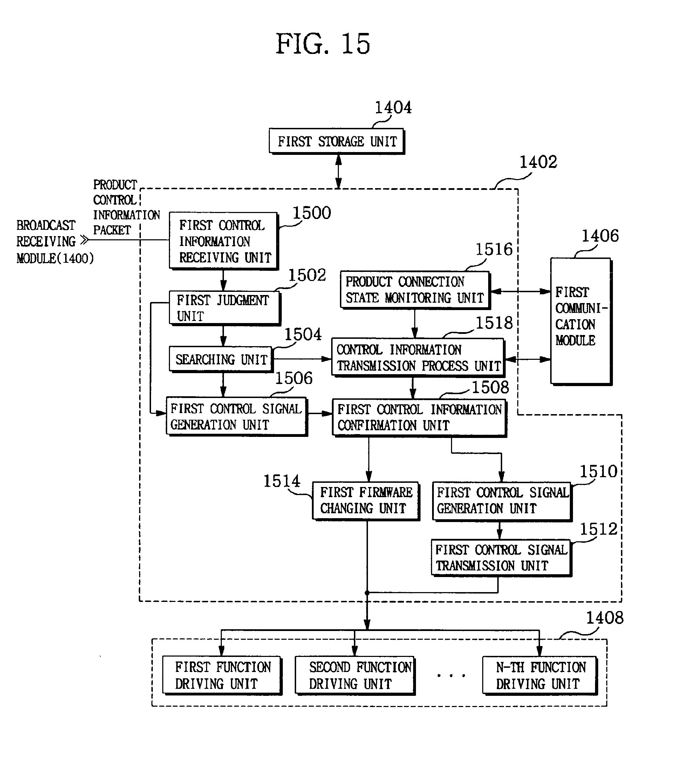

FIG. 15 is a detailed diagram illustrating a configuration of the first control unit 1402 shown in FIG. 14.

Referring to FIG. 15, the first control unit 1402 includes a first control information receiving unit 1500 for inputting a product control information packet received by the broadcast receiving module 1400, a first judgment unit 1502 for judging whether identification information in the product control information packet received by the first control information receiving unit 1500 is identical with that stored in the first storage unit 1404, a searching unit 1504 for searching for the second electric appliance having the identical identification information by comparing the identification information of the second electric appliances 1306 with that in the product control information packet, if the identification information is not identical, as a result of judgment, a product connection state monitoring unit 1516 for monitoring whether the second electric appliance 1306 searched for by the searching unit 1504 is connected to the home network through the first communication module 1406 and a control information transmission processing unit 1518 for transmitting the product control information packet to the second electric appliance 1306 searched for by the searching unit 1504 according to the monitoring result of the product connection state monitoring unit 1516.

If the broadcast receiving module 1400 receives the product control information packet, the first control information receiving unit 1500 in the first control unit 1402 inputs the product control information packet.

The first judgment unit 1502 judges whether identification information in the product control information packet inputted from the first control information receiving unit 1500 is identical with that stored in the first storage unit 1404.

As described above, the first storage unit 1404 stores its own identification information, the identification information of the second electric appliances 1306 available at the home network, the structure of the product control information packet and interpretation information capable of interpreting respective data values in the packet. Accordingly, the first control unit 1402 can discriminate what respective data mean, the data included in the product control information packet using the interpretation information stored in the first storage unit 1404.

As a result of the judgment of the first judgment unit 1502, if the identification information in the product control information packet is not identical to that stored in the first storage unit 1404, the searching unit 1504 compares the identification information of the second electric appliances 1306 stored in the first storage unit 1404 with that in the product control information packet, and searches for the second electric appliance 1306 having the identical identification information.

If the searching unit 1504 searches for the second electric appliance 1306 having the identical identification information, the control information transmission processing unit 1518 transmits the product control information packet to the searched second electric appliance 1306 through the first communication module 1406.

The product connection state monitoring unit 1516 monitors whether the second electric appliances 1306 are connected to the home network through the first communication module 1406.

The control information transmission processing unit 1518 judges a monitoring result of the product connection state monitoring unit 1516, prior to the transmission of the product control information packet. Further, if the second electric appliance 1306 searched by the searching unit 1504 is currently connected to the home network, the transmission processing unit 1518 transmits the product control information packet to the second relevant electric appliance 1306 through the first communication module 1406.

As a result of the judgment, if the second relevant electric appliance 1306 searched for by the searching unit 1514 is not connected to the home network, the control information transmission processing unit 1518 continuously checks whether the second electric appliance 1306 is connected to the home network, based on a monitoring result of the product connection state monitoring unit 1516. If the second electric appliance 1306 is connected to the home network, the transmission processing unit 1518 transmits the product control information packet to the second electric appliance 1306 through the first communication module 1406.

In other words, the control information transmission processing unit 1518 transmits the product control information packet, in a state that the second electric appliance 1306 may receive the product control information packet.

The first control unit 1402 may further include a first information receipt confirmation unit 1506 for judging whether the same product control information packet as the packet inputted to the first control information receiving unit 1500 has been previously received, a first control information confirmation unit 1508 for confirming control data in the product control information packet, if product control information packet has not been previously received, based on a result of judgment of the first information receipt confirmation unit 1506, a first control signal generation unit 1510 for generationg a control signal for controlling the function driving unit 1408 corresponding to a control object according a control code, if the control data is the control code as a result of the confirmation of the first control information confirmation unit 1508, a first control signal transmission unit 1512 for transmitting the control signal generated from the first control signal generation unit 1510 to the corresponded function driving unit 1408, and a first firmware changing unit 1514 for changing a firmware of the function driving unit 1408 corresponding to a control object to an upgraded form, if the control data is found to be the upgraded firmware as a result of confirmation of the first control information confirmation unit 1508.

Since operations of the first information receipt confirmation unit 1506, the first control information confirmation unit 1508, the first control signal generation unit 1510 and the first firmware changing unit 1514 are the same as those of the control unit 402 as shown in FIG. 5, the explanation thereto is omitted.

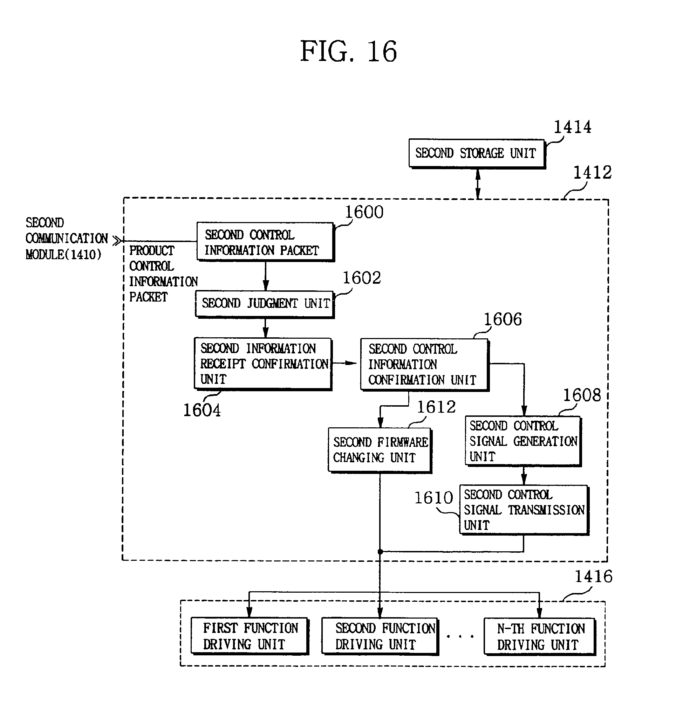

FIG. 16 is a diagram illustrating a detail configuration of the second control unit 1410 shown in FIG. 14.

Referring to FIG. 16, if the product control information packet is inputted to the second control unit 1410 from the first electric appliance 1304 through the second communication module 1408, a second control information receiving unit 1600 inputs the product control information packet. Further, the second control unit 1410 controls an operation of the second electric appliance 1306 in response to the control data of the product control information packet inputted from the second control information receiving unit 1600.

Since operations of the second control information receiving unit 1600, a second judgment unit 1602, a second information receipt confirmation unit 1604, a second control information confirmation unit 1606, a second control signal generation unit 1608, a second control signal transmission unit 1610 and a second firmware changing unit 1612, all of which are equipped in the second control unit 1410, are the same as those of the control unit 402 shown in FIG. 5, a detailed explanation thereto is omitted.

Further, a plurality of function driving units 1408 disposed at the first electric appliance 1304 and a plurality of function driving units 1416 equipped in the second electric appliance 1306 are diversely configured relative to electric appliances. For example, a plurality of function driving units 1408 and 1416 may be a power supply unit, an information display window, a voice output unit, a video output unit and a central processing unit. Further, a control signal, which is generated from the first and second control signal generation units 1510 and 1608 in response to the control data in the product control information packet, may be enable/disable signals or power on/off signals of a function driving unit corresponding to a control object in a plurality of driving units 1408 and 1416.

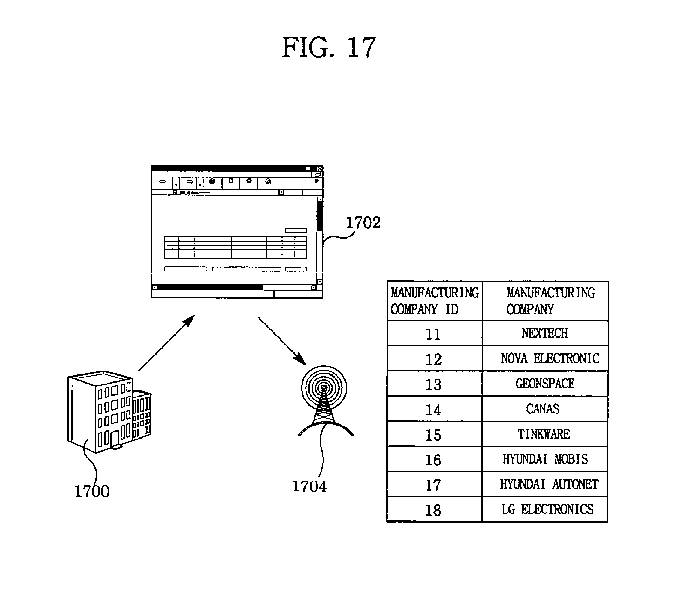

Referring now to FIG. 17, an electric appliance manufacturing company 1700 requests an FM broadcasting station 1704 to broadcast control information 1702 for controlling the electric appliance to the FM multiplex broadcasting.

As one of the methods for the electric appliance manufacturing company 1704 to request the FM broadcasting station 1704 to broadcast via FM multiplex broadcasting for controlling the electric appliance, the electric appliance manufacturing company 1700 inputs respective data values in the product control information packet corresponding to the electric appliance to a website of the FM broadcasting station 1704. In this case, manufacturing company IDs are given to each electric appliance manufacturing company 1700.

In controlling the electric appliance, a plurality of electric appliance manufacturing companies 1700 log-in to a website of the FM broadcasting station 1704 with the given manufacturing company IDs. Then, the electric appliance manufacturing companies 1700 request the FM broadcasting station 1704 to control the electric appliance by selecting the electric appliance to be controlled and inputting all sorts of data including a control code or an upgraded firmware.

The FM broadcasting station 1704 receives the control requests for the electric appliances from respective electric appliance manufacturing companies 1700 through the website by adding information inputted with the requests to the product control information packet, enabling to control electric appliances widely used in respective homes.

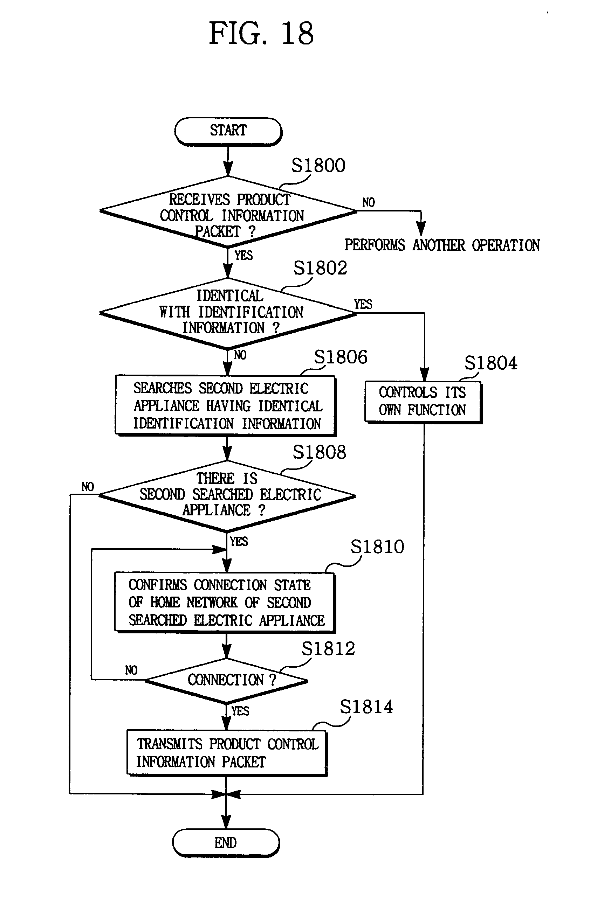

FIG. 18 is a signal flow chart illustrating a method for controlling the electric appliance connected to a home network according to a third exemplary embodiment of the present invention.

Referring to FIG. 18, in the first electric appliance 1304 connected to the home network, if the broadcast receiving module 1400 receives a product control information packet transmitted by the FM multiplex broadcasting S1800, the first control unit 1402 judges whether identification information in the product control information packet is identical with the stored in the first storage unit 1404 S1802.

As a result of the judgment, if the identification information is identical, the first control unit 1402 controls a driving of the function control unit 1408 relative to the control data in the product control information packet or changes a firmware of the function driving unit 1408 into an upgraded firmware S1804.

Further, as the result of the judgment, if the identification information is not identical, the first control unit 1402 compares the identification information in the product control information packet with that of the second electric appliances 1306 stored in the first storage unit 1404 and searches if there exists the second corresponding electric appliance 1306 having the identical information S1806.

As a result of the search, if the second electric appliance having the identical identification information exists S1808, the first control unit 1402 checks whether the second electric appliance 1306 is connected to the home network S1810.

As a result of confirmation, if the second electric appliance is not connected to the home network S1812, the first control unit 1402 continuously checks whether or not the second electric appliance 1306 is connected to the home network.

If the second electric appliance 1306 becomes connected to the home network S1812, the first control unit 1402 transmits the product control information packet to the second corresponded electric appliance 1306 through the home network S1814.

First, the second electric appliance 1306 judges whether identification information in the product control information packet transmitted from the first electric appliance 1304 is identical with its own identification information. If the identification information is identical, the second electric appliance 1306 checks whether the product control information packet has been previously processed. Further, if the packet has not been previously processed, the second electric appliance 1306 controls the operation of the function driving unit 1416 in response to the control data in the product control information packet or upgrades the firmware.

According to the present invention, the first and second electric appliances 1304 and 1306 connected to the home network may be remotely controlled or functionally upgraded by the product control information packet transmitted through the broadcast wave.

The present invention may provide more upgraded services to users of the electric appliances, since electric appliance manufacturing companies transmit in real time all sorts of guidance information on the electric appliances using the broadcast wave.

Meanwhile, since information display capability of a user interface equipped in electric appliances is different depending on a specification and a configuration of a product, the electric appliances may not display guidance information composed of various forms of data through the user interface. In other words, the guidance information received through the broadcast wave may not be correctly displayed, because of the difference between information to be displayed and information display capability provided in the electric appliances.

Preferably, all the guidance information transmitted through the broadcast wave is displayed by enabling the plurality of electric appliances to combine their user interfaces, if the electric appliances are connected to the home network.

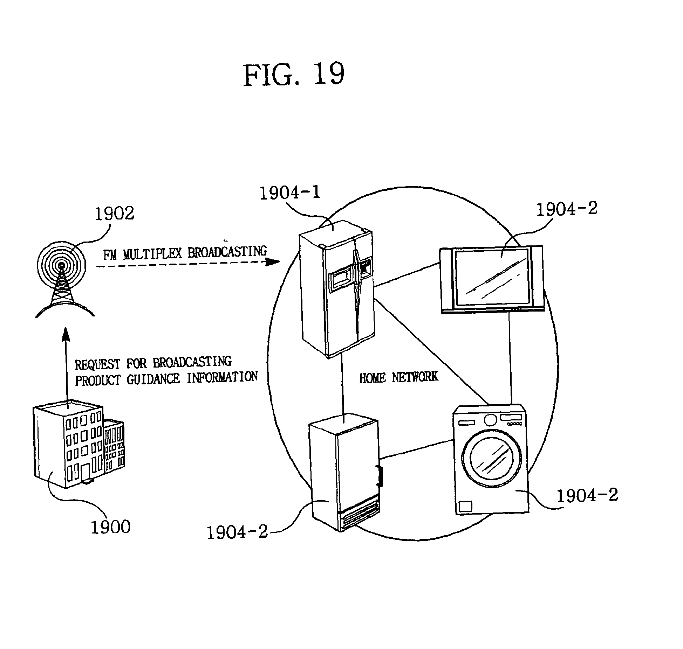

FIG. 19 is a diagram explaining an operation of an electric appliance displaying guidance information according to a fourth exemplary embodiment of the present invention.

Referring to FIG. 19, a plurality of electric appliances 1904 are interconnected through the home network. Additionally, the plurality of electric appliances 1904 (1904-1 and 1904-2) are respectively equipped with a broadcast receiving module which can receive a product guidance information packet broadcast through the FM multiplex broadcasting.

An electric appliance manufacturing company 1900 requests an FM broadcasting station 1902 to broadcast guidance information via the FM multiplex broadcasting, if the guidance information on a predetermined electric appliance is provided. Successively, the FM broadcasting station 1902 broadcasts the product guidance information packet including guidance information on the relevant electric appliance as the FM multiplex broadcasting information, in response to the request from the electric appliance manufacturing company 1900.

The electric appliances 1904 receive the product guidance information packet transmitted by the FM broadcast wave and judge whether the received product guidance information packet corresponds to electric appliances 1904 themselves.

It is assumed that identification information of the product guidance information packet is identical with that of the first electric appliance 1904-1 and is not identical with that of the second electric appliance 1904-2.

As a result of the judgment, if the product guidance information packet received by the first electric appliance 1904-1 corresponds to itself, the first electric appliance 1904-1 judges whether guidance information included in the product guidance information packet is displayed through a built-in user interface. As a result of judgment, if the user interface equipped in the first electric appliance 1904-1 can display the guidance information, the first electric appliance 1904-1 prompts the built-in user interface to display the guidance information.

The guidance information included in the product guidance information packet may include any one or more information out of video, voice, graphic and text message information. Accordingly, there are cases where the first electric appliance 1904-1 may not accurately display the guidance information by way of a display function of the built-in user interface.

Consequently, if the guidance information cannot be displayed to the user interface, the first electric appliance 1904-1 checks information on the display function of the user interface respectively equipped in the second electric appliances 1904-2 connected to the home network. Additionally, the guidance information is made to be displayed through the user interface of the second electric appliance 1904-2, by searching the second electric appliance 1904 having the user interface capable of adequately displaying the guidance information among the second electric appliances 1904-2 that are connected to the home network and by transmitting the guidance information to the second electric appliance 1904-2.

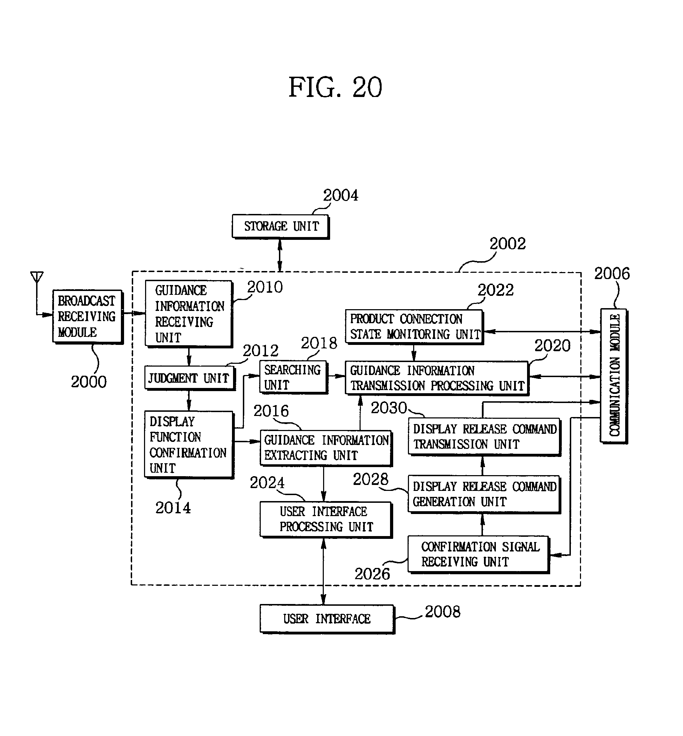

FIG. 20 is a block diagram illustrating a configuration of the first electric appliance which can receive a broadcast wave on a home network for performing a product guidance information display function according to a fourth exemplary embodiment of the present invention.

Referring to FIG. 20, the first electric appliance 1904-1 includes a broadcast receiving module 2000, a control unit 2002, a storage unit 2004, a communication module 2006 and a user interface 2008.

The broadcast receiving module 2000 receives a product guidance information packet transmitted by the FM broadcasting station 1902 through a broadcast wave.

The storage unit 2004 stores identification information of the first electric appliance 1904-1 and information on display functions of a user interface 2008 of the first electric appliance 1904-1 and a user interface respectively equipped in a plurality of second electric appliances 1904-2.

The communication module 2006 performs communication with a plurality of second electric appliances 1904-2 connected to the home network.

If the broadcast receiving module 2000 receives the product guidance information packet, the control unit 2002 controls display of guidance information in the product guidance information packet using information stored in the storage unit 2004, using the user interface 2008 or a user interface respectively equipped in a plurality of the second electric appliances 1904-2.

The control unit 2002 includes a guidance information receiving unit 2010, a judgment unit 2012, a display function confirmation unit 2014, a guidance information extracting unit 2016, a searching unit 2018, a guidance information transmission processing unit 2020, a product connection state monitoring unit 2022 and a user interface 2024.

The guidance information receiving unit 2010 inputs the product guidance information packet received by the broadcast receiving module 2000.

The judgment unit 2012 judges whether identification information in the product guidance information packet inputted to the guidance information receiving unit 2010 is identical with that of the first electric appliance 1904-1 stored in the storage unit 2004.

As a result of the judgment by the judgment unit 2012, if the identification information is identical, the display function confirmation unit 2014 checks a data form of the guidance information included in the product guidance information packet and information on a display function of the user interface 2008 stored in the storage unit 2004 and thus checks if the user interface 2008 can display the guidance information.

As a result of the check by the display function confirmation unit 2014, if the user interface 2008 can display the guidance information, the guidance information extracting unit 2016 extracts the guidance information from the product guidance information packet and displays the guidance information by transmitting the extracted information to the user interface 2008 through the user interface processing unit 2024. Furthermore, if a user confirmation command with respect to the displayed guidance information is inputted through the user interface 2008, the user interface processing unit 2024 releases the display of the guidance information of the user interface 2008 according to the confirmation command.

As a result of the check of the display function confirmation unit 2014, if the data form of the guidance information is not normally displayed by the user interface 2008, the searching unit 2018 checks information on display functions of the user interface which is respectively equipped in the second electric appliances 1904-2 stored in the storage unit 2004. Thereafter, the searching unit 2018 searches for the second electric appliance 1904-2 disposed at a user interface which can appropriately display the guidance information.

As a result of the search of the searching unit 2018, if the second electric appliance 1904-2 exists, the guidance information transmission processing unit 2020 allows the guidance information to be transmitted to the second corresponded electric appliance 1904-2 through the communication module 2006 for display thereof

The product connection state monitoring unit 2022 monitors whether the second electric appliance 1904-2 searched by the searching unit 2018 is connected to the home network, before the guidance information transmission processing unit 2020 transmits the guidance information.

As a result of the monitoring, the guidance information transmission processing unit 2020 transmits the guidance information, if the second corresponding electric appliance 1904-2 is connected to the home network.

The present invention enables the guidance information to be displayed through the second electric appliance 1904-2 having a good information display function of a user interface among a plurality of the second electric appliances 1904-2 connected to the home network, and the first electric appliance 1904-1 informs a user of the guidance information, regardless of limitation of the display function of the user interface 2008 equipped therein.

The control unit 2002 further includes a confirmation signal receiving unit 2026 for receiving a guidance information confirmation signal from the second electric appliance 1904-2 that receives guidance information transmitted from the guidance information transmission processing unit 2020, a display release command generation unit 2028 for generating a display release command for releasing a display of the guidance information if the confirmation signal receiving unit 2026 receives the guidance information confirmation signal and a display release command transmission unit 2030 for transmitting the display release command generated from the display release command generation unit 2028 to the second electric appliance 1904-2.

The second electric appliance 1904-2 displays the guidance information transmitted from the guidance information transmission processing unit 2020 through the user interface. If the user confirms the displayed guidance information and inputs a confirmation command, the second electric appliance 1904-2 transmits a confirmation signal of the guidance information to the first electric appliance 1904-1 through the home network.

The confirmation signal receiving unit 2026 receives the confirmation signal of the guidance information transmitted from the second electric appliance 1904-2. Further, the confirmation signal receiving unit 2026 makes it sure that the guidance information has been confirmed by the user in accordance with the receipt of the confirmation signal of the guidance information, and prompts the display release command generation unit 2028 to generate a display release command for releasing of the display of the guidance information by informing the display release command generation unit 2028 of the judgment result.

The display release command transmission unit 2030 transmits the display release command generated from the display release command generation unit 2028 to the second electric appliance 1904-2 through the communication module 2006, and the relevant second electric appliance 1904-2 releases the display of the guidance information.

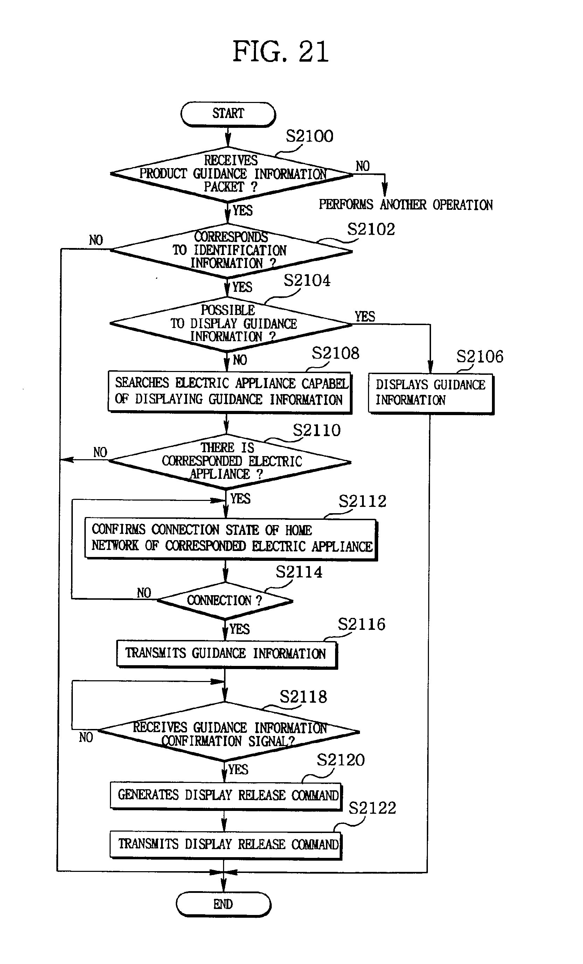

FIG. 21 is a flow chart showing a method for displaying information of the first electric appliance which can receive a broadcast wave on the home network according to the fourth exemplary embodiment of the present invention.

Referring to FIG. 21, if the broadcast receiving module 2000 of the first electric appliance 1904-1 receives a product guidance information packet S2100, the control unit 2002 judges whether identification information in the received product guidance information packet is identical with that of the first electric appliance 1904-1 stored in the storage unit 2004 S2102.

As a result of the judgment, if the identification information in the product guidance information packet is identical with that of the first electric appliance 1904-1, the control unit 2002 judges whether guidance information included in the product guidance information packet can be displayed through the user interface 2008 S2104. If the guidance information cna be displayed through the user interface 2008, the control unit 2002 extracts guidance information from the product guidance information packet, transmits and displays the information to the user interface 2008 S2106.

If the guidance information cannot be displayed through the user interface 2008, the control unit 2002 searches for the second electric appliance 1904-2 having the user interface capable of displaying the guidance information among a plurality of the second electric appliances 1904-2 connected to the home network S2108.

Further, if the second electric appliance 1904-2 capable of displaying the guidance information is searched S2110, the first electric appliance 1904-1 checks whether the second corresponding electric appliance 1904-2 is connected to the home network S2114. If the second electric appliance 1904-2 is connected to the home network, the first electric appliance 1904-1 transmits and displays the guidance information to the second corresponding electric appliance through the home network S2116.

Still further, if the relevant second electric appliance 1904-2 is not connected to the home network, the first electric appliance 1904-1 stands by, untill the second electric appliance 1904-2 is connected to the home network and transmits the guidance information, when the second electric appliance 1904-2 becomes connected to the home network S2116.

Likewise, if the first electric appliance 1904-1 transmits the guidance information to the second electric appliance 1904-2, the second electric appliance 1904-2 displays the received guidance information through the built-in user interface.

If a guidance information confirmation signal of a user is inputted through the user interface in a state where the guidance information is displayed through the user interface, the second electric appliance 1904-2 transmits the guidance information confirmation signal of the user to the first electric appliance 1904-1 through the home network.

The first electric appliance 1904-1 checks if the guidance information confirmation signal has been received from the second electric appliance 1904-2 S2118, and generates a display release command for the guidance information S2120. The generated display release command is transmitted to the second electric appliance 1904-2 through the home network S2122 and prompts the second electric appliance 1904-2 to release the display of the guidance information.

As described above, the present invention can remotely control the electric appliance according to request of the electric appliance manufacturing company using the broadcast wave and upgrade the function of the product. Particularly, the electric appliance is closely related to the user's everyday life, and the electric appliance manufacturing company can transmit and upgrade a firmware by which malfunctions are corrected, if any sort of electric appliances sold individually are thought to malfunction while being continuously tested. Accordingly, it can improve the safety of the electric appliance and the user's safety.

Further, if electric appliances are connected to a home network, all electric appliances can be remotely controlled and functionally upgraded, even though only one electric appliance is equipped with the broadcast receiving module capable of receiving the broadcast wave, thereby removing the inefficiency where the broadcast receiving module capable of receiving the broadcast wave should be equipped with all the electric appliances.

It is possible to quickly warn of a natural disaster by performing a broadcasting the natural disaster through the broadcast wave if the natural disaster occurs, and prompting electric appliances installed at respective homes to receive the broadcasting and display the information.

Further, if an electric appliance receives a broadcast wave capable of receiving guidance information, the electric appliance displays the guidance information through a built-in user interface. If the electric appliance cannot display the information, another electric appliance capable of displaying the guidance information is searched for to display the information. Accordingly, the electric appliances can display and report the guidance information to the user.

It should be understood by those of ordinary skill in the art that various replacement, modifications and changes in the form and details may be made therein without departing from the sprit and scope of the present invention as defined by the following claims. Therefore, it is to be appreciated that the above described embodiments are for purpose of illustration only and are not to be construed as limitations of the invention.

## Claims

1. An apparatus for controlling an electric appliance using a broadcast wave, comprising:
a broadcast receiving module for receiving a broadcast wave including a product related additional packet;
a storage unit for storing identification information of an electric appliance, a structure of the product-related additional packet and interpretation information capable of interpreting identification information and control information included in the product-related additional packet ; and
a control unit for controlling an operation of the electric appliance according to the control information in the received product-related additional packet, if the identification information stored in the storage unit is identical with that included in the received product-related additional packet.

2. The apparatus of claim 1, further comprising a plurality of function driving units for enabling the control unit to control a driving according to a control code in a product control information packet, if the product-related additional packet received by the broadcast receiving module is the product control information packet.

3. The apparatus of claim 2, wherein the control unit comprises:
a judgment unit for judging whether the identification information stored in the storage unit is identical with that in the received product control information packet;
a control signal generation unit for generating a control signal to the function driving unit corresponding to a control object in the electric appliance according to the control code in the product control information packet, if the identification information is identical; and
a control signal transmission unit for transmitting the control signal generated from the control signal generation unit to the relevant function driving unit.

4. The apparatus of claim 3, further comprising an information receipt confirmation unit for judging whether the product control information packet has been previously received, if the identification information stored in the storage unit is identical with that in the received product control information packet,
wherein the control signal generation unit generates the control signal if the product control information packet is different from the previously received product control information packet as a result of the confirmation of the information receipt confirmation unit.

5. The apparatus of claim 3, further comprising:
a control information confirmation unit for checking whether an upgraded firmware in the product control information packet exists, if the identification information stored in the storage unit is identical with that in the product control information packet, as a result of the judgment of the judgment unit; and
a firmware changing unit for changing a firmware of the corresponding function driving unit to the upgraded form, if the upgraded firmware exists, as a result of the confirmation of the control information confirmation unit.

6. The apparatus of claim 2, wherein the product control information packet comprising:
an update flag that is sequentially changed according to the updated data value in the product control information packet;
a manufacturing company specific code of a predetermined electric appliance;
product information on the electric appliance;
a serial number of the electric appliance;
control data on the control of the electric appliance; and
a control classification code composed of a state flag representing a state of the control data and a control object controlled by the control data.

7. The apparatus of claim 1, further comprising:
a user interface for giving a user warning by displaying one or more data in warning sound data in the packet and warning text message data under the control of the control unit, if the product-related additional packet received by the broadcast receiving module is a disaster warning data packet.

8. The apparatus of claim 7, further comprising:
a warning sound database for storing warning sound data on a plurality of natural disasters,
wherein the disaster warning data packet includes one or more data in warning sound codes corresponding to the warning sound data stored in the warning sound database and warning text message data.

9. The apparatus of claim 8, wherein the control unit comprises:
a warning sound extracting unit for extracting warning sound data corresponding to the warning sound codes in the disaster warning data packet from the warning sound database;
a warning text message extracting unit for extracting warning text message data included in the disaster warning data packet;
a warning sound transmission unit for transmitting the warning sound data extracted from the warning sound extracting unit to a voice processing unit, so as to enable the voice processing unit to display the data through a speaker; and
a warning text message transmission unit for transmitting the warning text message data extracted from the warning text message extracting unit, so as to enable a text message processing unit to display the data on a screen display unit.

10. The apparatus of claim 9, further comprising:
a power supply for supplying a main power and a standby power,
wherein the control unit further comprises a power management unit for prompting the main power to be turned on, if the main power is turned off, by monitoring the state of the power supply of the electric appliance.

11. A method for controlling an electric appliance using a broadcast wave, comprising:
receiving a broadcast wave including a product control information packet;
comparing identification information included in the received product control information packet with that previously given to the electric appliance;
confirming control data included in the product control information packet, if the identification information in the product control information packet is identical with that of the electric appliance; and
performing a corresponding operation by controlling a function driving unit corresponding to a control object according to a control code, if the control data is the control code for controlling a function of the electric appliance.

12. The method of claim 11, further comprising changing a firmware of the corresponding function driving unit to an upgraded form, if the control data is the upgraded firmware.

13. The method of claim 11, further comprising confirming whether the product control information packet has been previously received, if the identification information in the product control information packet is identical to that of the electric appliance,
wherein a control is not performed according to control data in the product control information packet, if the product control information packet has been previously received.

14. A method for controlling an electric appliance using a broadcast wave, comprising:
enabling the electric appliance to receive the broadcast wave including a disaster warning data packet; and
displaying one or more data in warning sound data included in the received disaster warning data packet and warning text message data to a user interface.

15. A controller of a home network using a broadcast wave, comprising:
a first electric appliance for receiving the broadcast wave including a product control information packet and transmitting the product control information packet through the home network, if identification information in the received product control information packet is not identical with that given to the first electric appliance itself; and
a second electric appliance for receiving the product control information packet that the first electric appliance transmits through the home network and driving a function driving unit corresponding to a control object according to a control code in the product control information packet, if the identification information in the received product control information packet is identical to that given to the second appliance itself.

16. The apparatus of claim 15, wherein the first electric appliance comprises:
a broadcast receiving module for receiving a broadcast wave including the product control information packet;
a first communication module for communicating with the second electric appliance through the home network;
a first storage unit for storing identification information of the first electric appliance, a structure of the product control information packet and interpretation information capable of interpreting respective data values in the packet; and
a first control unit for transmitting the product control information packet to the second electric appliance through the first communication module, if the identification information stored in the first storage unit is not identical with that included in the product control information packet.

17. The apparatus of claim 16, wherein the first storage unit further stores identification information of a plurality of the second electric appliances connected to the home network, and the first control unit searches for the second electric appliance that is identical, by comparing the identification information of the plurality of the second electric appliances stored in the first storage unit with that in the product control information packet, and transmits the product control information packet to the second searched electric appliance.

18. The apparatus of claim 15, wherein the second electric appliance comprises:
a second communication module for receiving a product control information packet transmitted from the first electric appliance through the home network;
a second storage unit for storing identification information of the second electric information, a structure of the product control information packet and interpretation information capable of interpreting respective data values in the packet; and
a second control unit for controlling the function driving unit corresponding to a control object according to a control code in the product control information packet, if the identification information in the product control information packet received by the second communication module is identical with that of the second electric appliance stored in the second storage unit.

19. A method for controlling a home network using a broadcast wave, comprising:
enabling a first electric appliance to receive the broadcast wave including a product control information packet;
comparing identification information included in the received product control information packet with that of the first electric appliance;
enabling the first electric appliance to transmit the product control information packet to a second electric appliance through the home network, if the identification information in the product control information packet is not identical with that of the first electric appliance; and
enabling the second electric appliance to control a function driving unit corresponding to a control object according to a control code in the product control information packet.

20. The method of claim 19, wherein the transmission of the product control information packet comprises;
enabling the first electric appliance to search for a second electric appliance that is identical by comparing the identification information of the plurality of the second electric appliances connected to the home network with that in the product control information; and
transmitting the product control information packet to the second electric appliance.

21. An apparatus for controlling a home network, comprising:
a broadcast receiving module equipped in a first electric appliance for receiving a broadcast wave including a product guidance information packet;
a communication module for communicating with a plurality of second electric appliances connected to the home network;
a storage unit for storing identification information of the first electric appliance and information on a display function of a user interface respectively equipped in the first electric appliance and the second electric appliances;
a user interface unit equipped in the first electric appliance for displaying guidance information included in the product guidance information packet; and
a control unit for controlling in such a manner that the guidance information can be transmitted through the communication module by searching for the second electric appliance equipped at an user interface capable of displaying the guidance information, if identification information in the product guidance information packet received by the broadcast receiving module is identical with that of the first electric appliance stored in the storage unit, and the user interface can not display the guidance information.

22. The apparatus of claim 21, wherein the control unit comprises:
a judgment unit for judging whether identification information in the product guidance information packet that the broadcast receiving module receives is identical with that of the first electric appliance stored in the storage unit;
a display function confirmation unit for checking whether a built-in user interface can display guidance information, if identification information in a product guidance information packet is identical with that of the first electric appliance;
a searching unit for searching for a second electric appliance equipped at a user interface capable of displaying guidance information, if the user interface cannot display guidance information, as a result of the confirmation of the display function confirmation unit;
a guidance information extracting unit for extracting its own guidance information included in the product guidance information packet; and
a guidance information transmission processing unit for transmitting the guidance information extracted from the guidance information extracting unit to the second electric appliance searched for by the searching unit through the communication module.

23. The apparatus of claim 22, wherein the control unit further comprises:
a confirmation signal receiving unit for receiving a guidance information confirmation signal of a user from the second electric appliance that transmits its own guidance information;
a display release command generation unit for generating a display release command for releasing the display of guidance information, if the confirmation signal receiving unit receives a guidance information confirmation signal of the user; and
a display release command transmission unit for transmitting the display release command generated from the display release command generation unit to the second electric appliance.

24. The apparatus of claim 21, wherein the guidance information in the product guidance information packet comprises one or more data in video, voice, graphic and text message data.

25. A method for controlling a home network using a broadcast wave, comprising:
enabling a first electric appliance to receive a broadcast wave including a product guidance information packet;
comparing identification information in the received product guidance information packet with that of the first electric appliance;
searching for a second electric appliance capable of displaying guidance information included in the product guidance information packet, if the identification information in the product guidance information packet is identical with that of the first electric appliance; and
enabling the guidance information transmitted to the second electric appliance to be displayed.

26. The method of claim 25, further comprising:
judging whether a guidance information confirmation signal of a user is received from the second electric appliance;
generating a display release command for releasing the display of the guidance information, if the guidance information confirmation signal of the user is received; and
transmitting the generated display release command to the second electric appliance.
